# EUROPEAN PATENT APPLICATION

(11) **EP 2 789 677 A1**
(43) Date of publication of application: **15.10.2014**
(21) Application number: 13001929.2
(22) Date of filing: 12.04.2013
(51) Int. Cl.: C10L 5/44, C10L 9/08

(54) **Torrefaction plant, its operation and maintenance**

(71) Applicant: Kymi Baltic Consulting Oü, 67411 Valga maakond (EE)
(72) Inventor: Erki, Unn, 67411 Valga maakond (EE)
(74) Representative: Koitel, Raivo

(57) **Abstract**

Torrefaction plant, its operation and maintenance is provided. The plant comprises two joined barrels. At the end of both barrels there are drives of augers, which locks are easily opened by a hatch. Inside of both barrels there are rotating auger conveyers having heating tubes inside them. Escape of gases from barrels will happen through the upper parts of the barrels which is perforated and the gas can be reused for heating the plant. Inside the barrels there are wear parts, which can be replaced.

## Description

### Technical field

Wood and other biomass handled with heat, by batch or continuously, is old technology.

Originally this was the way to produce charcoal, that which is convenient for cooking and roasting of food, because it generates only a limited amount of smoke when burning. Charcoal was made also for metallurgical purposes. The continuous torrefaction plant is feed with wood pieces, which often contain soil and sand, thus easily exposing this kind of plant to wear.

The more modern treatment for wood is torrefaction, which is heat treatment at a temperature less than 270 °C. At 170 °C the wood starts to break up, releasing organic acids, methanol, acetone and the rest is water. At the same time CO, H₂, CO₂ and CH₄ are released so that the gas heating values are little more than what is needed for the torrefication. The amount of acetic acid can be up to 6% of the wood's dry weight. This was also the original method how 'Perstorp Company' in Sweden 1924 started to make acetic acid. Tiny amounts of propionic acid and formic acid are also released. The acid gas mixture is highly corrosive.

The purpose of torrefaction is to bring wood to a state where it no longer takes hydroscopic water and torrefied wood or other biomass is easier to pelletize or briquette. Torrefied wood or biomass no longer rots, so like coal we can store it for longer times.

Up to 270 °C the torrefaction reaction is endothermic, at temperatures higher than that it starts to become exothermic. After 350 °C reactions are endothermic again, when tar starts to form and be released. Tar formation is highest at a temperature of 500 °C .

The yield at different temperatures is as follows:

| T / °C | Yield | C-content |
|---|---|---|
| 200 | 91.8 | 52.3 |
| 300 | 51.4 | 73.3 |
| 400 | 40.6 | 77.7 |
| 500 | 31.0 | 89.2 |

Torrefied wood and biomass publications exist in numerous amounts, but no real production plant exist. We guess that at least one reason is corrosion and the second is wear-out.

An article on the Internet 'Torrefaction Technology' (June 17, 2010) tells us or claims, that there are no torrefaction reactors operating in the world, especially no commercial installations. The same article also discusses whether torrefaction plants exist or not. It seems that in Holland there may be one. It is obvious that the technology has had and has still today technical problems, which we have now solved with this invention.

Torrefaction is especially suitable for 'second hand' wood and other biomass utilization.

The term 'second hand' here means that the forest is too old, too mixed and not often thinned or partially rotten.

In torrefaction technology there exist the following problems:
- maintenance;
- wear of conveyor augers and conveyor barrels;
- temperature control;
- heavy corrosion.

In order to solve all these problems a torrefaction plant of this invention has been made and the manner in which the torrefication plant is operated (used and maintained) is also represented.

### Prior art

US 20090203119 A1 discloses a biomass reactor, where heating happens with magnets located and rotating within electrically conductive material which is nonmagnetic. It seems that the purpose of this invention is to control exactly the temperature of the treated material.

EP 2443215 A1 discloses a pyrolysis reactor which operated in conditions corresponding to atmospheric pressure and is maintained with a vacuum pump. Conditions are maintained such, with a liquid lock, that oxygen from the atmosphere is not present.

EP 2326415 A1 discloses a rotary kiln reactor from which an Archimedes screw conveyor will remove treated material and that the screw 'comprises a baffle element which is making "backup" mixing for the material.' The gases released are forced to move through the bulk material particularly for secondary degradation

US 7947155 B1 discloses 'process and device for pyrolysis of feedstock'. Here are two alternatives for heating the feed stuff. The first is the external oven where pyrolysis gases are burned and the other alternative is the inner tube heater and the auger rotates around the inner tube. The auger is a helical screw. A Venturi type of suction element takes the pyrolysis gases and burns them after the start-up. The start-up is made of external fuel. The purpose of this process is to produce carbon or especially activated carbon by mixing 'catalyst' for the feedstock in order to generate necessary pores for activated carbon formation.

http://www.btgword.com/nl/rtd/tecnologies/torrefaction discloses a Dutch device and process, where two separate but conjoined Archimedes screws work with an external heating chamber. In this BTG process the first chamber within the screw releases the gases to the same direction where torrefied material is moving, but in the second chamber and screw the gases are moving to the opposite direction. In both chambers the material is heated externally from one side only.

http://energydynamicscorp.com/html/technology.html discloses a torrefaction device or process, where two different helical augers are working, following each other and the heating is done outside. Gasification is so complete that at the end of the second auger only the ash emitted from the second screw conveyor is collected and heat from the flue gas stack. The tubes around the augers are obviously perforated for releasing gases. Gasified product vapours are collected at certain place to separation cyclone.

None of these constructions or inventions solve the maintenance and corrosion problems as is the case of the present invention. Neither have they solved clearly the problem of how to control temperature at the hot end to the level of 275-284 °C, because immediately above that starts exothermic reactions, which we would like to prevent.

If and when the torrefaction system is integrated into continuous pellet/briquette formation, the whole system is easy to pressurize. This means that the size of the plant is smaller and in order to pressurize it plug-screw feeding is needed for the raw material. This means more electrical power consumption, but on the other hand, it means also more uniform particle size and a more uniform torrefaction of the material.

### List of figures

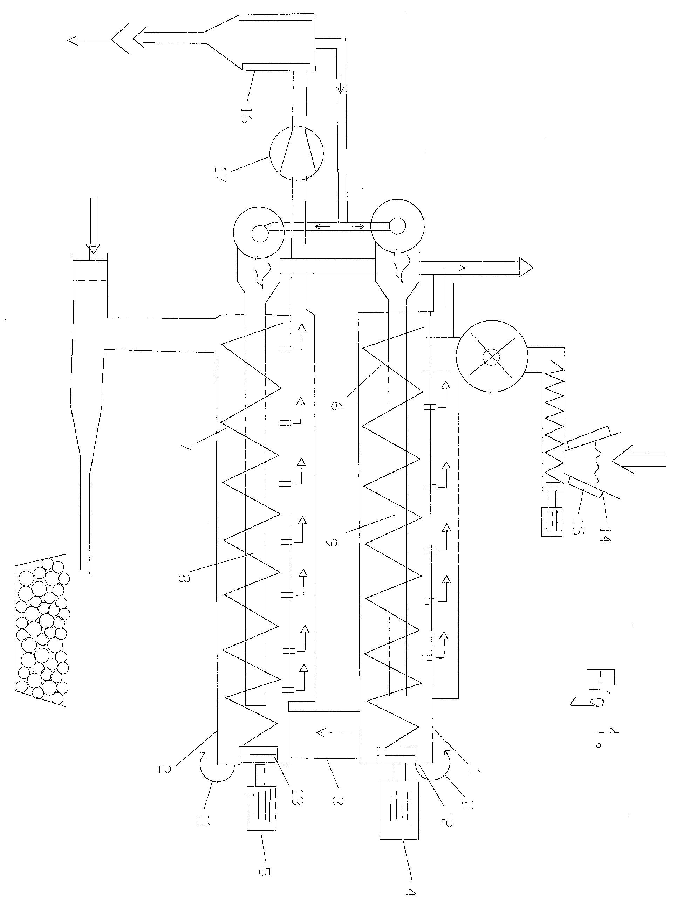

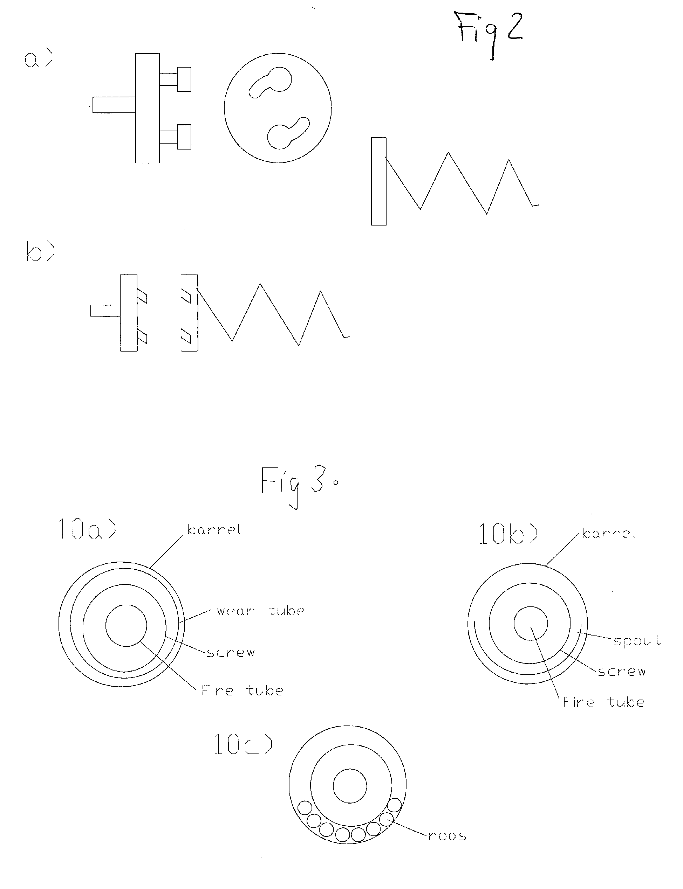

In Figure1 we see the two barrels 1 and 2. At the end of first barrel 1 hole 3 is locating from where the dried biomaterial falls to the second barrel 2. At the end of both barrels 1, 2 there are the drives of augers at the same side, 4 and 5. The drive-locks are easily opened by a hatch 11. Inside of both barrels 1, 2 there are the rotating auger conveyers 6 and 7. The heating tubes 8 and 9 are symmetrically inside the auger conveyers 6 and 7. In Figure 3 the bottom of the barrels is covered with steel rods (see 10c), which can be pulled out and changed as the wear is too great. Instead of the bottom rods there can be used also a spout made from 1-3 mm steel, covering the lower half of the barrel. This spout can also be changed quickly when it wears out. The drive couplings at the drive-end are numbers 12 and 13. The feed stock bin is shown as number 14 and the preheating mantel (optional) as number 15. The condenser for gas coming from torrefied material is number 16. The first barrel 1 is only for drying the material and its off-gases are not mixed to the main torrefying gases, because they only dilute burnable gases with water vapours. The burning gases come only from the second barrel 2. In both cases the escape of the gases will happen through the upper parts of the perforated barrels 1, 2. The burnable gas blower is 17.

On Figure 2 we see two alternatives embodiments a) and b) of auger couplings to the drive-end. Embodiment a) works with drive direction change.

On Figure 3 we see the wear parts inside the barrels (10a, 10b, 10c).

### Description of the invention

In our invention and construction and also the way to operate, the following features are typical:
● Figure 1 shows the total assembly of feed, outlet and two tube arrangement.
● The drive ends of helical augers are snap-locks (Figure 2) for rapid removal and cleaning of screws. The drive-lock is easily opened via hatch 11. Here we have two different embodiments: a) when the auger is rotating in two directions and b) when auger is rotating in one direction only. When the direction of revolution is changed, the drive lock b) is opening.
● Heat distribution tubes are located inside the helical augers, which are a type of recuperative burners with pre-heat for the in-coming air and recirculation of flue gas.
● The entire piece of equipment is assembled from two separate helical augers where the uppermost is the feed and drying zone with perforated barrel tube for drying gas removal, from where the dried material is falling to the lower and hotter space, from where the torrefaction gas is collected for burning. Helical auger drive is on the opposing end to the feed end.
● Both heating tubes are assembled directly to the heat source from the other end and the helical gear drive is on the other end. Both helical auger drives are at the same end. It is only necessary to open drive end cap of for maintenance.
● Helical augers are reversible if snap lock like shown on Fig 2 a) is used.
● The regulation of the torrefication temperature is arranged so that the second (lower) helical augers revolution are regulated with adaptive feed-back from the outlet ends temperature sensor.
● Option for corrosion prevention (acetic acid + formic acid) can be made with feeding wood ash, Ca-compounds, Mg -compounds 0,5-5 % mixed with the biomass feed. They do neutralize these acids in gas-atmosphere, but they do not affect the acetic acids' ability to depolymerize hemicellulose inside the biomass material. The actually formed Ca-acetate will break up into CaCO₃ + Acetone (CH₃COCH₃) and CaCO₃ will again form Ca-acetate. The break-up happens at 160 °C. Similar reactions happen with K- and Na-salts, but they are stable at higher temperatures. So we see that in the case of Ca-acetate it is not actually chemically consumed.
● The 'torrgas' from auger-space is collected, cooled and optionally condensed for improving gases heat value. The condensate flows through a bed packed with lime stone or dolomite stone for neutralization and purification. The dried gas is stored slightly pressurized in a gas vessel and led to burn. The total process is exothermic, but start-up must happen with external fuel.
● As an option the preliminary pre-heating of feed material is arranged to happen with the first cooling stage of the 'torrgas', in the feed bin's mantel. Later cooling is made by preheating burning air at the same time and/or finally with water. This option is used only when the humidity of the feed material is very high (greater than 50%) or the extra heat does have another suitable use.
● The auger's location in the barrel is asymmetric, so that there is free space above the screw for the free and slow flowing of the gases to the cooling, condensing and burning.
● At the bottom of barrels there is a number of wear parts, which can easily be changed when worn-out enough. When the augers location is as described in the section below the only wear out exist at the bottom of barrels and of course in the augers themselves, but the augers do wear symmetrically because they are rotating. Instead of the wear parts we can use a spout, which will be replaced with a new one when it is worn out. Inside the steel barrel we can also assemble an inner-tube, which can always be turned gradually when maintenance is happening until it is worn out and ready for replacement. All these and possible more variations of construction can be made for the same maintenance purpose (see Figure 3).
● The device allows the feed material heat treatment at temperature up to 1000°C.

## Claims

1. Torrefaction plant for biomass with easy maintenance, ***characterized in* that** it comprises:
- a first auger conveyor reactor, where material is merely dried;
- a second auger conveyor reactor, where material is merely torrefied;
- inside the rotating auger conveyors heat distribution tubes are locating, so that the lower and upper heat distribution tubes are separated and the off-gases are also separated, not mixed together;
- drive-locks for screws opening with a hatch for screws change or reparing;
- inside the main barrels wear-out elements are located, which can be changed by pulling them out, when the barrels are open.

2. Torrefaction plant according to the claim 1, ***characterized in* that** the barrels are perforated from the upper part, allowing from upper barrel off-gases escape merely as steam from the dried biomass and in the lower barrel off-gases are going to be burned and used in both barrels as heat source.

3. Torrefaction plant according to claims 1 and 2, ***characterized in* that** the barrels containing auger conveyors contain an inside tube in the barrel, which can be changed or rotated inside of the barrel and outside of the rotating helical auger torrefaction plant.

4. Torrefaction plant according to claims 1 to 3, ***characterized in* that** the wear-out elements are steel tube, steel rods or other steel elements which can be changed.

5. Torrefaction plant according to claims 1 to 4, ***characterized in* that** auger conveyors are reversible.

6. Method to operate torrefaction plant according to claims 1 to 5, ***characterized in* that** basic or basic reacting material is co-feed with biomass in order to neutralize the volatile acids which are released by heating from the biomass.

7. Method to operate torrefaction plant according to claim 6, ***characterized in* that** that basic reacting material is CaO, Ca(OH)₂ or CaCO₃.

8. Method to operate torrefaction plant according to claim 6, ***characterized in* that** basic reacting material is wood ash.

9. Method to operate torrefaction plant of claims 1 to 5 according to claims 6 to 8, ***characterized in* that** the outlet's material temperature is regulated with the second barrel's residence time, it means with the revolutions of the screw conveyor and the drier barrel temperature is regulated with adjusting the heat source tube burner gasfeed.

10. Method to operate torrefaction plant of claims 1 to 5 according to claims 6 to 9, ***characterized in* that** the pyrolysis gas emitted is cooled, the water condensed out and cleaned with Ca-compounds before it is used for burning.
